# EUROPÄISCHE PATENTANMELDUNG

(11) **EP 0 983 824 A1**
(43) Veröffentlichungstag der Anmeldung: **08.03.2000**
(21) Anmeldenummer: 99117235.4
(22) Anmeldetag: 02.09.1999
(51) Int. Cl.: B24D 11/02, B32B 29/02

(54) **Schleifpapier**

(30) Priorität: 05.09.1998 DE 19840657
(71) Anmelder: Wandmacher GmbH & Co. AWUKO-Schleifmittelwerk KG, 34346 Hann. Münden (DE)
(72) Erfinder: Pakusch, Axel, Dr. Dipl.- Physiko-Chemiker, 34359 Reinhardshagen (DE)
(74) Vertreter: WALTHER, WALTHER & HINZ Patentanwälte

(57) **Zusammenfassung**

Gegenstand der Erfindung ist ein Schleifpapier mit einer Trägerschicht (16) aus Papier, auf dessen Kornseite eine schleifende Substanz (20) aufgebracht ist. Ein Schleifpapier zu schaffen, welches kostengünstig herstellbar ist und welches eine für ein grobes Schleifkorn ausreichende Festigkeit aufweist, wird dadurch erreicht, daß auf der vorbereiteten Trägerschicht (16) druckseitig ein Gewebe (24) aus Glasfaser, Kohlefaser, Aramidfasern oder einer Kombination wenigstens einiger der vorgenannten Materialien aufgebracht, insbesondere kaschiert ist.

## Beschreibung

Die vorliegende Erfindung betrifft ein Schleifpapier mit einer Träger-schicht nur aus Papier, auf dessen Kornseite eine schleifende Substanz aufgebracht ist. Derartige Schleifpapiere kommen häufig in Form einer Scheibe oder in Form eines umlaufenden Bandes zum Einsatz, wobei das scheibenförmige Schleifpapier auf die rotierende Scheibe eines Rotationsschleifgerätes aufgebracht wird, während das umlaufende Schleifband bei einem Bandschleifgerät zum Einsatz kommt.

Derartige Schleifpapiere auf Papierbasis sind kostengünstig herstellbar und weisen für die meisten Anwendungsfälle auch eine ausreichende Festigkeit auf. Bei einem Schleifprozeß, insbesondere in der Ausführungsform als endlos Schleifband, können derart hohe Kräfte auftreten, daß die Trägerschicht aus Papier reißt. Um dies zu verhindern sind aus dem Stand der Technik Schleifmittel bekannt, deren Trägerschicht aus einem Polyester- oder Baumwollgewebe gebildet ist, die allerdings teuer in der Herstellung sind und bei denen außerdem die Gefahr besteht, daß aufgrund der Gewebestruktur, insbesondere im Feinkornbereich, zuviel Bindemittel aufgetragen wird und die Schleifkörner in der Klebematrix verschwinden, so daß sie für den Schleifprozeß nicht mehr zur Verfügung stehen.

Desweiteren ist aus der DE 32 02 260 A 1 ein flexibles Schleifmittel bekannt, dessen Trägerschicht aus einem Verbundmaterial aus Papier und Vlies besteht. Dieses Schleifmittel wird derart gefertigt, das zunächst das Trägermaterial aus Papier und Vlies hergestellt wird, bevor die Bindemittelschicht und das Schleifkorn aufgetragen wird. Neben dieser kostenintensiven Herstellungsweise hat sich herausgestellt, daß das aus der DE 32 02 260 A1 bekannte Schleifmittel nicht die gewünschte Festigkeit aufweist.

Davon ausgehend liegt der vorliegenden Erfindung die Aufgabe zugrunde, ein Schleifpapier zu schaffen, welches kostengünstig herstellbar ist und welches gleichzeitig eine verbesserte Reißfestigkeit aufweist.

Als technische Lösung dieser Aufgabe wird erfindungsgemäß vorgeschlagen, das Schleifpapier der eingangs genannten Art dahingehend weiterzubilden, daß auf der Trägerschicht druckseitig ein Gewebe aus Glasfasern, Kohlefasern, Aramidfasern oder einer Kombination wenigstens einiger der vorgenannten Materialien aufgebracht, insbesondere aufkaschiert, ist.

Ein nach dieser technischen Lehre ausgebildetes Schleifpapier hat den Vorteil, daß das Gewebe kostengünstig auf das ohnehin schon kostengünstig hergestellte Schleifpapier aufgebracht werden kann, wobei durch das Gewebe die Stabilität, insbesondere die (Zug-) Festigkeit, des Schleifpapieres deutlich erhöht wird.

Je nach Einsatzgebiet des Schleifpapieres, kann das Gewebe wahlweise aus Kohlefasern, Glasfasern oder Aramidfasern gebildet sein. Zur Erzielung einer optimalen Synthese zwischen Kosten und Stabilität kann auch ein Hybridgewebe eingesetzt werden, bei dem beispielsweise die Kettfäden aus Glasfasern (oder Aramidfasern) und die Schußfäden aus Kohlefasern bestehen. Andere Kombinationen sind ebenfalls denkbar.

Außerdem kann es in manchen Anwendungsfällen auch sinnvoll sein, lediglich einige Fasern aus Aramid einzusetzen, die gegebenenfalls am Rande oder an anderen kritischen Stellen konzentriert werden.

In einer anderen Ausführungsform werden die Kett- und/oder Schußfäden an kritischen Stellen konzentriert, das heißt der Abstand benachbarter Kett- und Schußfäden ist an den kritischen Stellen kleiner als anderswo, um kostengünstig eine höhere Festigkeit zu erreichen.

Schleifpapier mit einer feinen, mittleren oder groben Körnung kann mit einem solchen Gewebe versehen und eingesetzt werden, so daß hierdurch jedes Schleifpapier mit beliebiger Körnung kostengünstig mit einer hohen Festigkeit asugestattet werden kann. Ein wichtiger Vorteil des erfindungsgemäßen Schleifpapieres besteht darin, daß es für den maschinellen Einsatz geeignet ist und kostengünstiger als bestehende Schleifmittel auf Gewebebasis hergestellt werden kann. Ein weiterer Vorteil besteht darin, daß die glatte Oberfläche der Trägerschicht aus Papier eine gleichmäßige Ab- und Ausnutzung der Schleifsubstanz ermöglicht, so daß eine höhere Lebensdauer bzw. Standzeit erreicht wird.

Noch ein weiterer Vorteil besteht darin, daß bestehende Papier-Schleifmittel nachträglich mit einem für den jeweiligen Anwendungsfall individualisiertem Gewebe nachgerüstet werden können, so daß für jeden Anwendungsfall in kostengünstiger Weise ein optimales Schleifmittel zur Verfügung steht.

In einer bevorzugten Ausführungsform ist das Gewebe mit seinen Kettfäden bis auf fertigungstechnisch bedingte Ungenauigkeiten im Wesentlichen in Zugrichtung des Schleifpapieres ausgerichtet, so daß die vornehmlich in Zugrichtung auftretenden Kräfte vom Gewebe aufgenommen werden können. Bei Anwendungen, in denen große Querkräfte auftreten, können die Kettfäden auch in Querrichtung ausgerichtet werden.

In einer bevorzugten Weiterbildung ist das Gewebe unidirektional ausgebildet. Das heißt, das Gewebe weist in Zugrichtung sehr viel mehr und gegebenenfalls auch festere Fäden auf, als in der anderen Richtung. Hierdurch wird das Gewebe auf das aus Festigkeitsgründen notwendige Minimum reduziert, was zu Materialeinsparungen führt.

In noch einer anderen, bevorzugten Ausführungsform beträgt der lichte Abstand (d) zwischen zwei benachbarten Fäden mindestens 0,2 mm, höchstens jedoch 10 mm. Der lichte Abstand entsteht durch das Beabstanden bzw. Weglassen einiger Fasern, so daß hierdurch die Materialkosten gesenkt werden können. In der Praxis kann somit eine optimale Synthese zwischen Kosten, das heißt zwischen Abstand der einzelnen Fasern, und der erforderlichen Festigkeit erreicht werden.

Das erfindungsgemäße Schleifpapier kann besonders kostengünstig dadurch hergestellt werden, daß auf bestehendes Schleifpapier druckseitig (rückseitig) das oben beschriebene Gewebe aufkaschiert, insbesondere aufgeklebt wird. Hierbei wird vorzugsweise ein langkettiger Kleber mit einem hohen Anteil eines Elastifikators verwendet, der das Gewebe zuverlässig an der Trägerschicht aus Papier hält. Dieser Kleber kann beispielsweise aus Polyurethan mit 2 % bis 15 % eines Elastifikators oder aber aus Phenolharz mit 30 % bis 50 % eines Elastifikators gebildet sein.

Es hat sich bewährt als Elastifikator beispielsweise Carbamidsäureharz auf Basis von Butylurethan und/oder Formaldehyd einzusetzen.

Der Vorteil eines Klebers auf Polyurethan- oder Phenolbasis besteht unter anderem darin, daß hierdurch die Glasfasern nicht angegriffen werden, insbesondere nicht verspröden, so daß eine hohe Lebensdauer des Schleifpapiers bei hoher Festigkeit erreicht wird. Durch Hinzufügen von Ruß kann das gesamt Schleifmittel antistatisch eingestellt werden, so daß eine statische Aufladung der Schleifanlage verhindert wird.

Weitere Vorteile des erfindungsgemäßen Schleifpapieres ergeben sich aus der beigefügten Zeichnung und den nachfolgend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine perspektivische Ansicht eines ersten, umlaufenden Schleifbandes;
- Fig. 2: ein Schnitt durch das Schleifband gemäß Fig. 1, geschnitten entlang Linie II - II in Fig. 1;
- Fig. 3: eine perspektivische Ansicht eines zweiten, umlaufenden Schleifbandes;
- Fig. 4: ein Schnitt durch das Schleifband gemäß Fig. 2, geschnitten entlang Linie IV - IV in Fig. 3;
- Fig. 5: eine perspektivische Ansicht eines kreisförmigen Schleifpapieres.

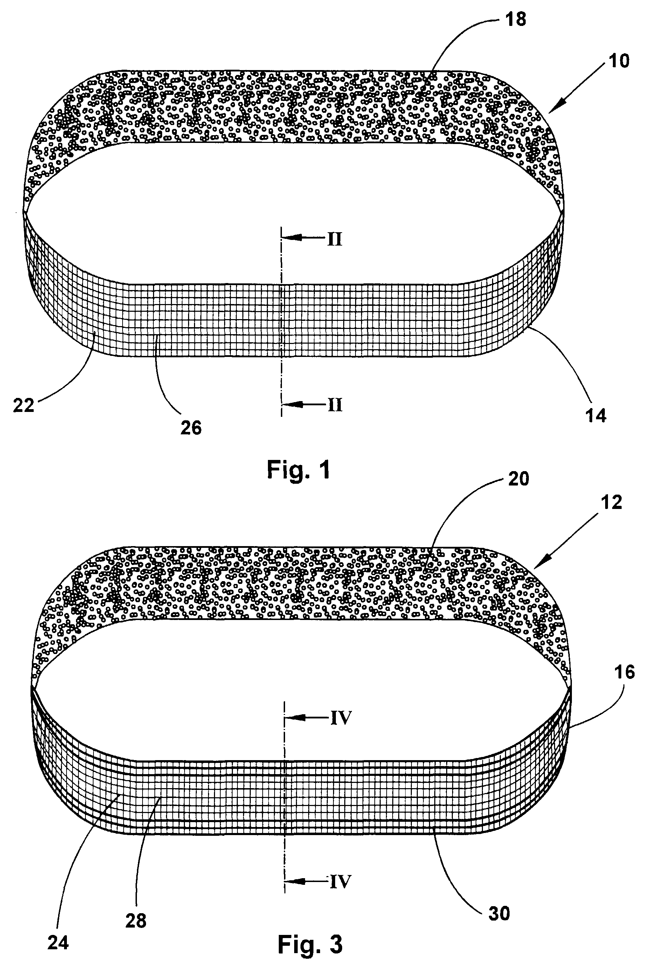

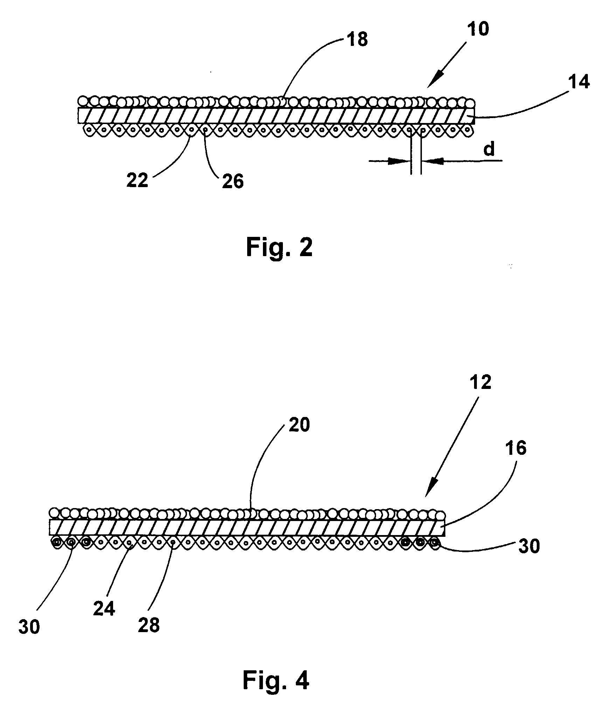

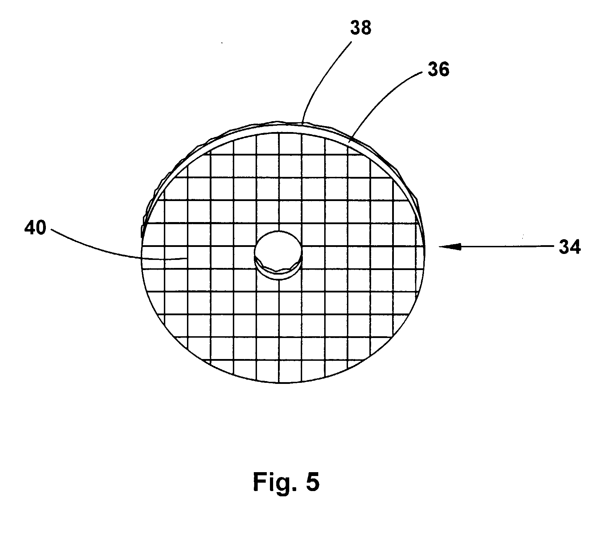

In Fig. 1 und 2 ist eine erste Ausführungsform eines erfindungsgemäßen Schleifpapieres dargestellt, welches als umlaufendes Schleifband für ein Bandschleifgerät ausgeführt ist, während in den Fig. 3 und 4 eine zweite und der Figur 5 eine dritte Ausführungsform eines erfindungsgemäßen Schleifbandes dargestellt ist.

Die Schleifbänder 10, 12 weisen eine Trägerschicht 14, 16 aus Papier auf, wobei auf die Trägerschicht 14, 16 kornseitig in üblicher Weise ein Schleifkorn 18, 20 aufgebracht ist. An einer hier nicht näher dargestellten Stelle, befindet sich eine Nahtstelle, an der das Schleifband 10, 12 verklebt wurde.

Druckseitig ist auf die Trägerschicht 14, 16 ein Gewebe 22, 24 aufgeklebt, deren Kettfaden 26, 28 in Längsrichtung verläuft. Das Gewebe 22 des Schleitbandes 10 ist ein reines Glasfasergewebe, wobei der Freiraum d zwischen zwei benachbarten Fasern etwa 2 mm beträgt. Dieser Freiram d wird je nach Beanspruchung des Schleifbandes 10 ausgewählt und kann zwischen 0,2 mm und 10 mm betragen.

Im Gegensatz zu dem Schleifband 10 gemäß den Figuren 1 und 2, ist das Gewebe 24 des Schleifbandes 12 an den Rändern statt mit einem Kettfaden 28 aus Glasfaser mit einem Kettfaden aus Aramid 30 ausgestattet, um die Festigkeit des Schleifbandes 12 im Randbereich deutlich zu verbessern.

In Figur 5 ist ein Schleifpapier 34 dargestellt, welches zum Einsatz auf rotierenden Schleifmaschinen kreisförmig ausgebildet ist. Auch dieses Schleifpapier 34 hat eine Trägerschicht 36 aus Papier, auf dessen Kornseite das Schleifkorn 38 und auf dessen Druckseite das Gewebe 40 angebracht ist. Das oben zu den ersten beiden Ausführungsformen Gesagte gilt hier analog, denn dieses Gewebe 40 ist ebenfalls aus Glasfasern hergestellt. Alternativ wären aber auch ein Gewebe aus Kohlefasern, aus Aramidfasern oder eine beliebige Mischform denkbar. Insbesondere ist auch ein Gewebe denkbar, das an entsprechenden Stellen, das heißt lokal mit Aramidfasern verstärkt ist.

Zur Herstellung des erfindungsgemäßen Schleifpapieres wird ein herkömmliches Schleifpapier genommen, auf dessen Druckseite (Rückseite) ein entsprechendes Gewebe aufkaschiert wird. Vorzugsweise wird hierzu das Gewebe in einem Kleber getränkt und sofort auf die Trägerschicht aufgebracht. Alternativ kann der Kleber aber auch separat auf die Druckseite des Schleifpapieres aufgetragen werden, bevor das Gewebe aufgebracht wird. Dabei verlaufen die Kettfäden vorzugsweise in Längsrichtung des Schleifpapieres.

Es hat sich herausgestellt, daß ein langkettiger Kleber mit einem hohen Anteil eines Elastifikators das Glasfasergewebe sehr gut am Schleifpapier befestigt. Als Kleber kann beispielsweise ein Phenolharz mit 30 % bis 50 % eines Elastifikators oder ein Polyorethan mit 2 % bis 15 % eines Elastifikators eingesetzt werden. Als Elastifikator kann beispielsweise Dispersion oder Carbonidsäureharz auf Basis von Butylurethan und/oder Formaldehyd eingesetzt werden.

Um das Schleifmittel antistatisch zu machen, kann dem Kleber und/oder dem Elastifikator Ruß beigefügt werden. Auch ist es möglich, das Gewebe durch Aufladen elektrisch leitender Fasern antistatisch auszubilden.

### Bezugszeichenliste:

- 10: Schleifband
- 12: Schleifband
- 14: Trägerschicht
- 16: Trägerschicht
- 18: Schleifkorn
- 20: Schleifkorn
- 22: Gewebe
- 24: Gewebe
- 26: Kettfaden
- 28: Kettfaden
- 30: Aramidfaden
- 34: Schleifpapier
- 36: Trägerschicht
- 38: Schleifkorn
- 40: Gewebe

## Patentansprüche

1. Schleifpapier mit einer Trägerschicht (14, 16, 36) aus Papier, auf dessen Kornseite eine schleifende Substanz (18, 20, 38) aufgebracht ist,
**dadurch gekennzeichnet**,
daß auf der Trägerschicht (14, 16, 36) druckseitig ein Gewebe (22, 24, 40) aus Glasfaser, Kohlefaser, Aramidfasern oder einer Kombination wenigstens einiger der vorgenannten Materialien aufgebracht, insbesondere kaschiert, ist.

2. Schleifpapier nach Anspruch 1,
**dadurch gekennzeichnet**,
daß das Gewebe (22, 24, 40) Längsfäden, vorzugsweise Kettfäden (26, 28), und Querfäden, vorzugsweise Schußfäden, aufweist, wobei die Längsfäden im wesentlichen in Zugrichtung des Schleifpapieres (10, 12) ausgerichtet sind.

3. Schleifpapier nach Anspruch 2,
**dadurch gekennzeichnet**,
daß das Gewebe (22, 24, 40) unidirektional ausgebildet ist.

4. Schleifpapier nach einem der vorangehenden Ansprüche,
**dadurch gekennzeichnet**,
daß das aus Glasfasern oder aus Kohlefasern gebildete Gewebe (22, 24, 40) an besonders stark beanspruchten Stellen lokal, insbesondere Randseitig, mit Aramidfasern (30) verstärkt ist.

5. Schleifpapier nach einem der vorangehenden Ansprüche,
**dadurch gekennzeichnet**,
daß der lichte Abstand zwischen zwei benachbarten Fäden zwischen 0,2 mm und 10 mm beträgt.

6. Schleifpapier nach einem der vorangehenden Ansprüche,
**dadurch gekennzeichnet**,
daß das Gewebe (22, 24, 40) mittels einem langkettigen Kleber auf die Trägerschicht (14, 16, 36) aus Papier aufkaschiert, insbesondere aufgeklebt ist, der einen Elastifikators aufweist.

7. Schleifpapier nach Anspruch 6,
**dadurch gekennzeichnet**,
daß der Kleber ein Polyurethanharz mit 2% bis 15 % eines Elastifikators oder ein Phenolharz mit 30 % bis 50 % eines Elastifikators ist.

8. Schleifpapier nach einem der Ansprüche 6 oder 7,
**dadurch gekennzeichnet**,
dass der Elastifikator ein Carbamidsäureharz aus Basis von Butylurethan und/oder Formaldehyd ist.

9. Schleifpapier nach einem der vorangehenden Ansprüche,
**dadurch gekennzeichnet**,
daß das Gewebe (22, 24, 40) als Hybrid ausgeführt ist.

10. Verfahren zur Herstellung des Schleifpapieres nach einem der vorangehenden Ansprüche,
**dadurch gekennzeichnet**,
daß das Gewebe (22, 24, 40) nachträglich auf die Trägerschicht (14, 16, 36) des vorgefertigten Schleifpapieres (10, 12, 34) aufgebracht, insbesondere aufkaschiert, wird.
